# EUROPÄISCHE PATENTANMELDUNG

(11) **EP 1 352 790 A2**
(43) Veröffentlichungstag der Anmeldung: **15.10.2003**
(21) Anmeldenummer: 03005035.5
(22) Anmeldetag: 06.03.2003
(51) Int. Cl.: B60R 19/40, B60R 21/34

(54) **An einem Fahrzeugrahmen lageveränderbar befestigter Stossfänger**

(30) Priorität: 09.04.2002 DE 20205514 U
(71) Anmelder: DURA Automotive Systems Reiche GmbH & Co. KG, 32791 Lage (DE)
(72) Erfinder: Breuer, Manfred, 32791 Lage (DE); Weitkamp, Thomas, 32139 Spenge (DE); Harhoff, Burkhard, 33719 Bielefeld (DE)
(74) Vertreter: Dantz, Jan Henning

(57) **Zusammenfassung**

Ein an einem Fahrzeugrahmen lageveränderbar befestigter Stoßfänger (1), mit mindestens zwei Haltern (2) zur Aufnahme von Aufprallenergie und zum Anschluss am Fahrzeugrahmen, wobei in den Haltern (2) Elemente vorgesehen sind, mit denen der Stoßfänger (1) in eine Aufprallstellung verschiebbar ist, ist so ausgestaltet, dass der Stoßfänger (1) an Anschlussteilen befestigt ist, die an den Haltern (2) mittels eines Antriebes hin- und her verfahrbar gelagert sind.

## Beschreibung

Die vorliegende Erfindung betrifft einen an einem Fahrzeugrahmen lageveränderbar befestigten Stoßfänger gemäß dem Oberbegriff des Anspruches 1.

Um das Verletzungsrisiko bei einem Aufprall, insbesondere für Fußgänger, zu mindern, ist es bekannt, Stoßfänger, zu denen im weitesten Sinne auch Querträger zu zählen sind, im Normalfall mit geringstmöglichem Abstand zur Karosserie des Fahrzeuges zu positionieren. Erst im Bedarfsfall, um Aufprallenergie aufnehmen zu können, ist der Stoßfänger in eine Aufprallstellung vorschiebbar, wobei dann die Halter in der Lage sind, eine auf den Stoßfänger einwirkende Energie aufzunehmen bzw. zu vernichten.

Hierzu sind die Halter so ausgebildet, dass bei einer axialen Verschiebung des Stoßfängers bzw. der Halter in Richtung des Fahrzeugrahmens Material des Halters unter Energieabsorption deformiert wird. Zur Realisierung des Vorschiebens des Stoßfängers in eine Aufprallstellung sind jedoch erhebliche konstruktive Maßnahmen erforderlich, die einen nennenswerten baulichen Aufwand umfassen. So ist beispielsweise das Erkennen einer Aufprallsituation nur mit einer hierzu geeigneten Sensorik möglich, die naturgemäß ebenfalls nur mit einem erheblichen apparativen Aufwand zu verwirklichen ist.

Zum Vorschieben des Stoßfängers im Falle eines Aufpralls sind verschiedene Lösungen bekannt, die jedoch allesamt eine schlagartige Bewegung bewirken, da nur so der in Bruchteilen von Sekunden zu erkennende und auftretende Aufprall aufgefangen werden kann.

Die bekannten Systeme haben überdies den Nachteil, dass sie nach einem Vorschieben eine irreversible Position einnehmen. Ein Zurückstellen des Stoßfängers in eine eingeschobene Stellung ist praktisch nur nach einer werkstattseitigen Demontage möglich. Dies ist insbesondere dann mit unnötigen Kosten verbunden, wenn ein zuvor erkannter Aufprall tatsächlich nicht stattgefunden hat bzw. wenn bei einem Aufprall so geringe Schäden am Stoßfänger auftreten, dass keine Reparatur erforderlich ist.

Der vorliegenden Erfindung liegt daher die Aufgabe zugrunde, einen Stoßfänger der gattungsgemäßen Art so weiterzuentwickeln, dass seine Funktionsfähigkeit mit geringstem konstruktiven Aufwand verbessert wird.

Diese Aufgabe wird durch einen Stoßfänger gelöst, der die Merkmale des Anspruches 1 aufweist.

Durch diese konstruktive Ausgestaltung, die mit einfachen baulichen Maßnahmen zu realisieren ist, kann der Stoßfänger sowohl in eine ausgefahrene Funktionsstellung gebracht werden, wie auch in eine demgegenüber zurückgesetzte Position, in der dann das Verletzungsrisiko bei einem Aufprall für einen Fußgänger minimiert wird.

Nach einer vorteilhaften Weiterbildung der Erfindung ist vorgesehen, dass ein Hinund Herverfahren des Stoßfängers geschwindigkeitsabhängig erfolgt. Dies hat den Vorteil, dass das System bei unterschiedlichen Geschwindigkeiten unterschiedliche Aufprallcharakteristiken aufweist. So kann das System z.B. so eingestellt werden, dass bei Geschwindigkeiten, bei denen typischerweise Fußgängerunfälle geschehen, das Verletzungsrisiko minimiert wird. Hierdurch wird ständig eine den jeweiligen Anforderungen genau angepasste Position des Stoßfängers erreicht.

Die Verstellung des Stoßfängers kann elektrisch, hydraulisch oder pneumatisch erfolgen, wobei in jedem Halter ein Antrieb, bspw. ein Motor, vorgesehen sein kann. Dabei kann die Kraftübertragung mittels eines Kolbens oder eines Spindelantriebs erfolgen.

Für eine absolut synchrone Hin- und Herbewegung des Stoßfängers besteht auch die Möglichkeit, lediglich einen zentralen Antrieb vorzusehen, der über den jeweiligen Haltern zugeordnete Getriebe den Stoßfänger hin- und herbewegt.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figuren 1 und 2: einen Teilausschnitt eines erfindungsgemäßen Stoßfängers jeweils in unterschiedlichen Verstellpositionen in einer geschnittenen Draufsicht;
- Figur 3: ein weiteres Ausführungsbeispiel des Stoßfängers, ebenfalls in unterschiedlichen Verstellpositionen in einer geschnittenen Draufsicht.

In den Figuren ist ein über Rahmenteile 3 an einem nicht dargestellten Fahrzeugrahmen lageveränderbar befestigter Stoßfänger 1 bzw. Querträger dargestellt, wobei hierzu zwei abständig zueinander angeordnete Halter 2 vorgesehen sind, die der Aufnahme von Aufprallenergie dienen.

Jeder Halter 2 besteht aus einem Tragrohr 5, das von einem mit dem Rahmenteil 3 verbundenen Ziehring 4 umschlossen ist. Bei einem Aufprall wird das Tragrohr 5 axial in Richtung des Rahmenteiles 3 verschoben unter gleichzeitiger Querschnittsverengung durch den Ziehring 4, wodurch Aufprallenergie vernichtet wird.

Selbstverständlich können statt dessen auch andere Energie absorbierende System vorgesehen sein, wie Faltboxen, Scherboxen, Stülprohre o.dgl.

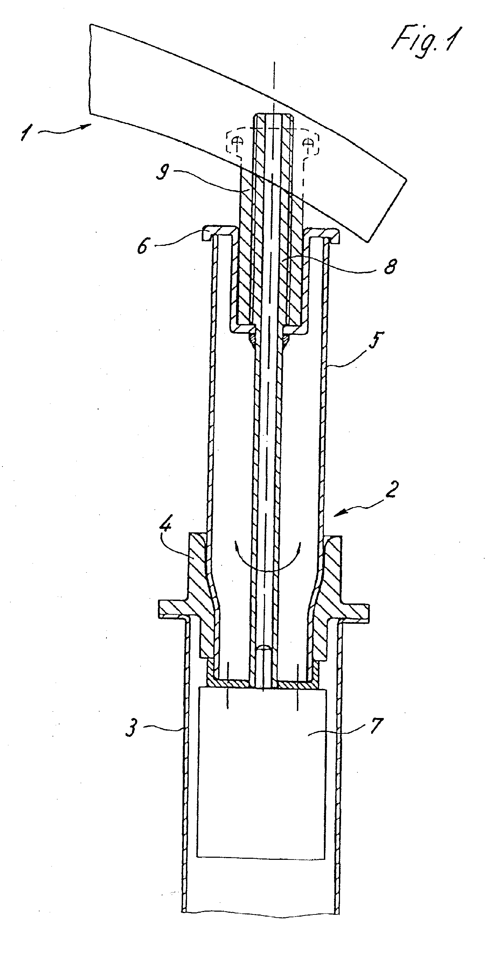

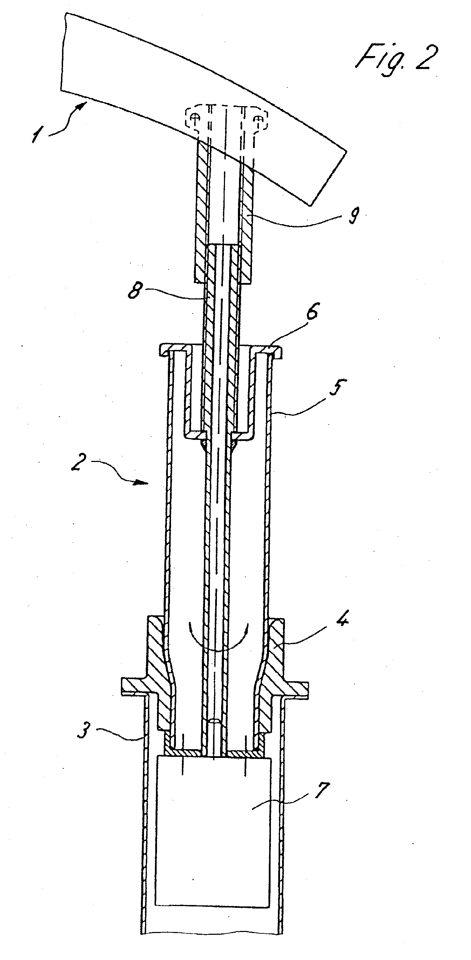

Während in der Figur 1 eine eingefahrene Stellung des Stoßfängers 1 dargestellt ist, zeigt die Figur 2 eine vorgeschobene Aufprallstellung.

Der Stoßfänger 1 ist dabei an Anschlussteilen in Form jeweils eines Spindelantriebs mit einer Spindelmutter 9, die mit dem Stoßfänger 1 fest verbunden ist und einer damit korrespondierenden Spindel 8 am Halter 2 hin- und herverfahrbar gelagert.

Hierzu ist in dem Rahmenteil 3 ein Motor 7, beispielsweise ein Elektromotor vorgesehen, der die Spindel 8 antreibt, die über eine Lagerhülse 6 drehbar an dem Tragrohr 5 festgelegt ist.

Durch Rechts-Links-Drehung der Spindel 8 wird im Zusammenwirken mit der Spindelmutter 9 der Stoßfänger 1 axial hin und her verschoben. Die Steuerung des Motors 7 kann, wie erwähnt, geschwindigkeitsabhängig und vorbestimmt erfolgen, wobei die ausgefahrene Position entsprechend der Figur 2 für und die eingefahrene, entsprechend der Figur 1, für unterschiedliche Geschwindigkeiten des Fahrzeuges gedacht sind.

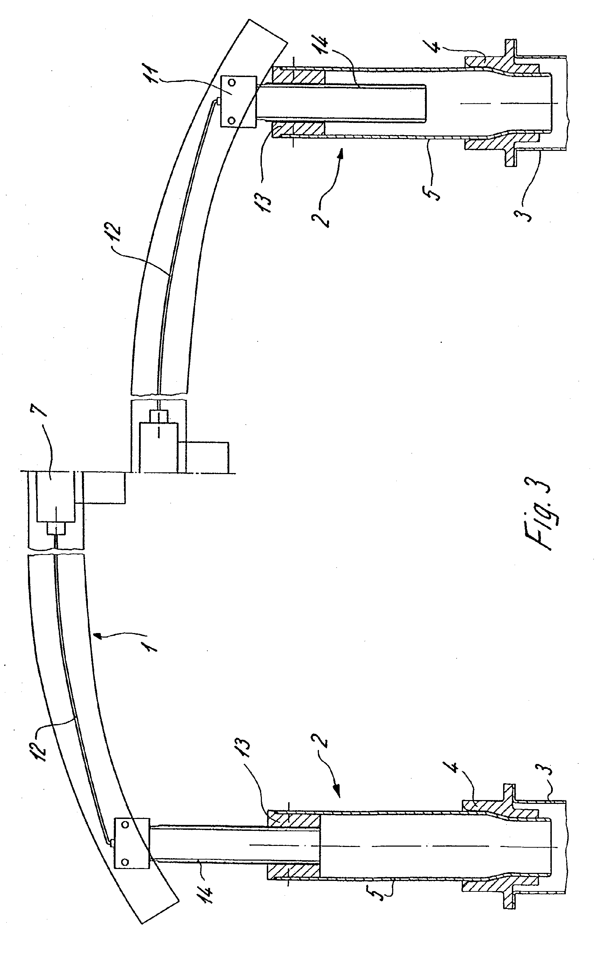

Diese Positionen sind ebenfalls bei dem in der Figur 3 dargestellten Ausführungsbeispiel erkennbar.

Hierbei ist lediglich ein zentraler Motor 7 vorgesehen, der in diesem Fall im Stoßfänger 1 oder Teilen davon integriert ist.

Beidseitig an dem Motor 7 sind biegsame Antriebswellen 12 angeschlossen, die andererseits jeweils mit einem Getriebe 11 in Verbindung stehen, durch das eine Spindel 14 drehbar ist.

Diese Spindel 14 korrespondiert mit einer im Tragrohr 5 festgesetzten Spindelmutter 13, so dass bei Betätigung des Motors 7, entsprechend einem Rechts-Links-Lauf der Stoßfängers 1 hin- und herbewegbar ist.

Diese Ausführungsvariante gewährleistet eine exakt synchrone Bewegung rechtsund linksseitig des Stoßfängers 1, wodurch ein selbst geringes Verkanten verhindert wird.

Die Gewinde der Spindeln 8, 14 bzw. der Spindelmuttern 9, 13 sind selbsthemmend ausgelegt, wodurch eine Fixierung des Stoßfängers 1 in der jeweiligen Position garantiert ist.

Anstelle der in den gezeigten Ausführungsbeispielen drehbaren Spindeln 8, 14 und den diesen gegenüber festgesetzten Spindelmuttern 9, 13 besteht selbstverständlich auch die Möglichkeit der kinematischen Umkehr, das heißt, dass stattdessen die Spindeln 8, 14 feststehen, während die Spindelmuttern 9, 13 drehbar sind.

## Patentansprüche

1. An einem Fahrzeugrahmen lageveränderbar befestigter Stoßfänger (1), mit mindestens zwei Haltern (2) zur Aufnahme von Aufprallenergie und zum Anschluss am Fahrzeugrahmen, wobei in den Haltern (2) Elemente vorgesehen sind, mit denen der Stoßfänger (1) in eine Aufprallstellung verschiebbar ist, **dadurch gekennzeichnet, dass** der Stoßfänger (1) an Anschlussteilen befestigt ist, die an den Haltern (2) mittels eines Antriebes hin- und her verfahrbar gelagert sind.

2. Stoßfänger nach Anspruch 1, **dadurch gekennzeichnet, dass** der Antrieb aus einem Motor (7) besteht.

3. Stoßfänger nach Anspruch 1, **dadurch gekennzeichnet, dass** an jedem Halter (2) ein Antrieb befestigt ist, der über Antriebsmittel mit dem Stoßfänger (1) in Verbindung steht.

4. Stoßfänger nach Anspruch 1, **dadurch gekennzeichnet, dass** der Antrieb elektrisch, hydraulisch oder pneumatisch betätigbar ist.

5. Stoßfänger nach Anspruch 1 oder 4, **dadurch gekennzeichnet, dass** der Antrieb als Motor (7) mit Spindelantrieb ausgebildet ist.

6. Stoßfänger nach Anspruch 5, **dadurch gekennzeichnet, dass** eine an dem Motor (7) angeschlossene, links-rechts-drehbare Spindel (8) in eine Spindelmutter (9) eingreift, die an dem Stoßfänger (1) befestigt ist.

7. Stoßfänger nach Anspruch 6, **dadurch gekennzeichnet, dass** die Spindel (8) mittels einer Lagerhülse (6) drehbar an einem Tragrohr (5) des Halters (2) gelagert ist.

8. Stoßfänger nach Anspruch 1, **dadurch gekennzeichnet, dass** ein zentraler Antrieb vorgesehen ist, über den die in den Haltern (2) vorgesehenen Antriebsmittel gleichzeitig antreibbar sind.

9. Stoßfänger nach Anspruch 8, **dadurch gekennzeichnet, dass** der als Motor (7) ausgebildete zentrale Antrieb zwei Antriebswellen (12), vorzugsweise biegsame, antreibt, die jeweils mit einem Getriebe (11) in Verbindung stehen, über die Spindeln (14) rechts-links-drehbar sind, die mit an den Haltern zwei befestigten Spindelmuttern (13) korrespondieren.

10. Stoßfänger nach einem der Ansprüche 1 bis 9, **dadurch gekennzeichnet, dass** die Gewinde der Spindeln (8, 14) bzw. der Spindelmuttern (9, 13) selbsthemmend ausgebildet sind.
